# EUROPEAN PATENT SPECIFICATION

(11) **EP 3 078 401 B1**
(45) Date of publication and mention of the grant of the patent: **16.08.2017**
(21) Application number: 16161561.2
(22) Date of filing: 22.03.2016
(51) Int. Cl.: A63H 3/00, H04M 1/725

(54) **WIRELESS COMMUNICATION BETWEEN ENDPOINT DEVICES**
DRAHTLOSKOMMUNIKATION ZWISCHEN ENDPUNKTVORRICHTUNGEN
COMMUNICATION SANS FIL ENTRE DES DISPOSITIFS D'EXTRÉMITÉ

(30) Priority: 08.04.2015 US 201514681346
(43) Date of publication of application: 12.10.2016
(73) Proprietor: Bose Corporation, Framingham, MA 01701-9168 (US)
(72) Inventor: PATIL, Naganagouda B., Framingham, MA 01701-9168 (US)
(74) Representative: Attali, Pascal

(56) References cited:
- US-A1- 2007 206 829
- US-A1- 2014 256 214

## Description

### BACKGROUND

This disclosure relates to a wireless communication between endpoint devices and the user experiences this enables.

As wireless capabilities are added to more and more devices, providing user interfaces that allow users to configure how such devices are interconnected becomes increasingly difficult. U.S. Patent Publication 2013/0260672, describes a system by which a wireless device, such as a set of headphones, may relay messages from one connected endpoint device, such as a mobile phone, to another connected endpoint device, such as a tablet computer, such that the two endpoint devices behave as if they have a direct communication link between each other. Such an infrastructure also allows one of those endpoint devices to control not only its own connection to the wireless device, but that wireless device's connection to and interaction with the other endpoint device. Such complex interactions and the details describing them can be very confusing or intimidating for users. This application describes a graphical user interface for operating on such an end point device that intuitively shows the user what is connected, and allows the user to control the wireless device and its interconnections in a comfortable, natural manner. An other prior art can be found in US2014/256214.

### SUMMARY

The present invention is defined in the appended set of claims.

In general, in one aspect, a first audio device has a first microphone, a first speaker, and a first wireless interface for receiving audio signals for reproduction on the first speaker and sending audio signals detected by the first microphone. A second audio device has a second speaker and a second wireless interface for receiving audio signals for reproduction on the second speaker. A computing device has a user interface. The first audio device is configurable to send the audio signals detected by the first microphone directly to the second audio device and the second audio device is configurable to receive and reproduce the audio signals received from the first audio device. The first and second audio devices are each one of a loudspeaker or a headset. The computing device presents on the user interface representations of both the first and second audio devices. Upon receiving user input indicating a connection between the representations of the first and second audio devices, the computing device inquires from the user whether a first or a second mode is to be used. Upon receiving user input confirming that the first mode is to be used, the computing device instructs the first audio device to send the audio signals detected by the first microphone directly to the second audio device, and instructs the second audio device to receive and reproduce the audio signals received from the first audio device. The first mode presented by the user interface is selected based on whether each of the first and second audio devices is a loudspeaker or a headset.

Implementations may include one or more of the following, in any combination. When the first audio device is a headset and the second audio device is a loudspeaker, such that in the first mode, when a user of the headset speaks, the user's voice may be reproduced by the loudspeaker, the user interface identifies the first mode as a public address mode. When the first audio device is a first loudspeaker and the second audio device is a second loudspeaker, such that in the first mode, a user of the second loudspeaker can hear sounds present near the first loudspeaker, the user interface identifies the first mode as a baby monitor mode. When in the first mode, the user interface presents the user with an audio playback control that allows the user to select audio for playback on the first loudspeaker, independently of any audio being played back on the second loudspeaker. The second loudspeaker may have a second microphone, and the second loudspeaker may be configurable to send audio signals detected by the second microphone directly to the first loudspeaker, and the first loudspeaker may be configurable to receive and reproduce the audio signals received from the second loudspeaker. When in the first mode, the user interface may present the user with a push-to-talk control that causes the second audio device to transmit audio signals detected by the second microphone to the first loudspeaker.

When the first audio device is a first headset and the second audio device is a second headset having a second microphone, the second headset may be configurable to send audio signals detected by the second microphone directly to the first headset and the first headset may be configurable to receive and reproduce the audio signals received from the second headset, such that users of the first and second headsets can engage in a two-way conversation through the headsets, in which case the user interface identifies the first mode as a conversation mode. When the first audio device is a loudspeaker and the second audio device is a headset, such that when sound is present in the environment of the loudspeaker, the sound may be reproduced by the headset, the user interface identifies the second mode as a remote listening mode. When one of the first audio device or the second audio device is a headset and the other audio device is a loudspeaker, the user interface may identify the first mode as either a public address mode or a remote listening mode, depending on the order in which the audio devices were connected to the computing device. When one of the first audio device or the second audio device is a headset and the other audio device is a loudspeaker, the user interface may identify the first mode as a public address mode and the second mode as a remote listening mode.

Another aspect relates to a computing device comprising: a user interface; a wireless interface for communicating with audio devices; a processor controlling the wireless interface and the user interface, and configured to: cause the wireless interface to form a first connection with a first audio device and receive first configuration information; cause the wireless interface to form a second connection with a second audio device and receive second configuration information; and when the first and second configuration information indicate that: the first audio device includes a first microphone, a first speaker, and a first wireless interface for receiving audio signals for reproduction on the first speaker and sending audio signals detected by the first microphone, the second audio device includes a second speaker and a second wireless interface for receiving audio signals for reproduction on the second speaker, the first audio device is configurable to send the audio signals detected by the first microphone directly to the second audio device and the second audio device is configurable to receive and reproduce the audio signals received from the first audio device, and the first and second audio devices are each one of a loudspeaker or a headset, present on the user interface representations of both the first and second audio devices; upon receiving user input indicating a connection between the representations of the first and second audio devices, use the user interface to inquire from the user whether a first or a second mode is to be used, wherein the first mode presented by the user interface is selected based on whether each of the first and second audio devices is a loudspeaker or a headset; and upon receiving user input confirming that the first mode is to be used, instruct the first audio device to send the audio signals detected by the first microphone directly to the second audio device, and instruct the second audio device to receive and reproduce the audio signals received from the first audio device.

Implementations may include one or more of the following, in any combination. When the first and second configuration information indicate that the first audio device is a headset and the second audio device is a loudspeaker, such that in the first mode, when a user of the headset speaks, the user's voice is reproduced by the loudspeaker, the processor is further configured to cause the user interface to identify the first mode as a public address mode. When the first and second configuration information indicate that the first audio device is a first loudspeaker and the second audio device is a second loudspeaker, such that in the first mode, a user of the second loudspeaker can hear sounds present near the first loudspeaker, the processor is further configured to cause the user interface to identify the first mode as a baby monitor mode. When in the first mode, the the processor is further configured to cause the user interface to present the user with an audio playback control that allows the user to select audio for playback on the first loudspeaker, independently of any audio being played back on the second loudspeaker. When the first and second configuration information indicate that the second loudspeaker has a second microphone, the second loudspeaker is configurable to send audio signals detected by the second microphone directly to the first loudspeaker, and the first loudspeaker is configurable to receive and reproduce the audio signals received from the second loudspeaker, the processor is further configured to cause the user interface to present the user with a push-to-talk control that causes the second audio device to transmit audio signals detected by the second microphone to the first loudspeaker. When the first and second configuration information indicate that the first audio device is a first headset and the second audio device is a second headset having a second microphone, and that the second headset is configurable to send audio signals detected by the second microphone directly to the first headset and the first headset is configurable to receive and reproduce the audio signals received from the second headset, such that users of the first and second headsets can engage in a two-way conversation through the headsets, the processor is further configured to cause the user interface to identify the first mode as a conversation mode. When the first and second configuration information indicate that the first audio device is a loudspeaker and the second audio device is a headset, such that when sound is present in the environment of the loudspeaker, the sound is reproduced by the headset, the processor is further configured to cause the user interface to identify the second mode as a remote listening mode. When the first and second configuration information indicate that one of the first audio device or the second audio device is a headset and the other audio device is a loudspeaker, the processor is further configured to cause the user interface to identify the first mode as either a public address mode or a remote listening mode, depending on the order in which the audio devices were connected to the computing device. When the first and second configuration information indicate that one of the first audio device or the second audio device is a headset and the other audio device is a loudspeaker, the processor is further configured to cause the user interface to identify the first mode as a public address mode and it identifies the second mode as a remote listening mode.

Another aspect relates to a method of operating a system comprising a first audio device having a first microphone, a first speaker, and a first wireless interface for receiving audio signals for reproduction on the first speaker and sending audio signals detected by the first microphone; a second audio device having a second speaker and a second wireless interface for receiving audio signals for reproduction on the second speaker; and a computing device having a user interface, wherein the first audio device is configurable to send the audio signals detected by the first microphone directly to the second audio device and the second audio device is configurable to receive and reproduce the audio signals received from the first audio device; and the first and second audio devices are each one of a loudspeaker or a headset; the method comprising: presenting on the user interface representations of both the first and second audio devices; upon receiving user input indicating a connection between the representations of the first and second audio devices, inquiring from the user whether a first or a second mode is to be used; and upon receiving user input confirming that the first mode is to be used, instructing the first audio device to send the audio signals detected by the first microphone directly to the second audio device, and instructing the second audio device to receive and reproduce the audio signals received from the first audio device; wherein the first mode presented by the user interface is selected based on whether each of the first and second audio devices is a loudspeaker or a headset.

Implementations may include one or more of the following, in any combination. When the first audio device is a headset and the second audio device is a loudspeaker, such that in the first mode, when a user of the headset speaks, the user's voice is reproduced by the loudspeaker, the first mode is identified as a public address mode. When the first audio device is a first loudspeaker and the second audio device is a second loudspeaker, such that in the first mode, a user of the second loudspeaker can hear sounds present near the first loudspeaker, the first mode is identified as a baby monitor mode. The method further comprising, when in the first mode, presenting the user with an audio playback control that allows the user to select audio for playback on the first loudspeaker, independently of any audio being played back on the second loudspeaker. When the first audio device is a first headset and the second audio device is a second headset having a second microphone, and the second headset is configurable to send audio signals detected by the second microphone directly to the first headset and the first headset is configurable to receive and reproduce the audio signals received from the second headset, such that users of the first and second headsets can engage in a two-way conversation through the headsets, the first mode is identified as a conversation mode. When the first audio device is a loudspeaker and the second audio device is a headset, such that when sound is present in the environment of the loudspeaker, the sound is reproduced by the headset, the second mode is identified as a remote listening mode. When one of the first audio device or the second audio device is a headset and the other audio device is a loudspeaker, the first mode is identified as a public address mode and the second mode is identified as a remote listening mode.

Advantages include providing a user with an intuitive understanding of and control over their interconnected devices, and providing peer-to-peer audio device modes with an intuitive interface to understand the uses of such modes.

All examples and features mentioned above can be combined in any technically possible way. Other features and advantages will be apparent from the description and the claims.

### BRIEF DESCRIPTION OF THE DRAWINGS

Figure 1 shows a system of interconnected electronic devices.
Figures 2 through 9 and 11 through 13 show screens of a user interface for one or more of the devices of figure 1.
Figures 10A though 10C show pairs of interconnected electronic devices.

### DESCRIPTION

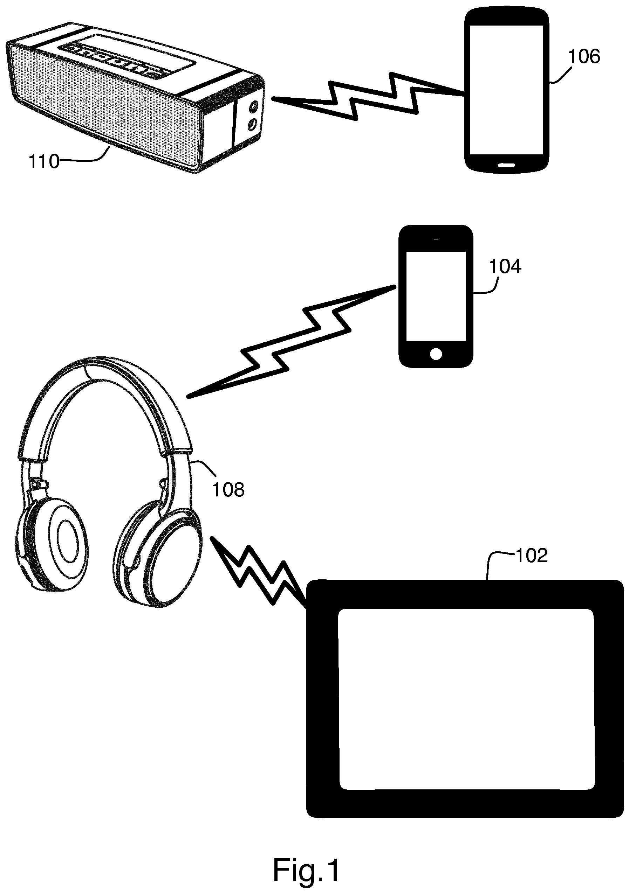

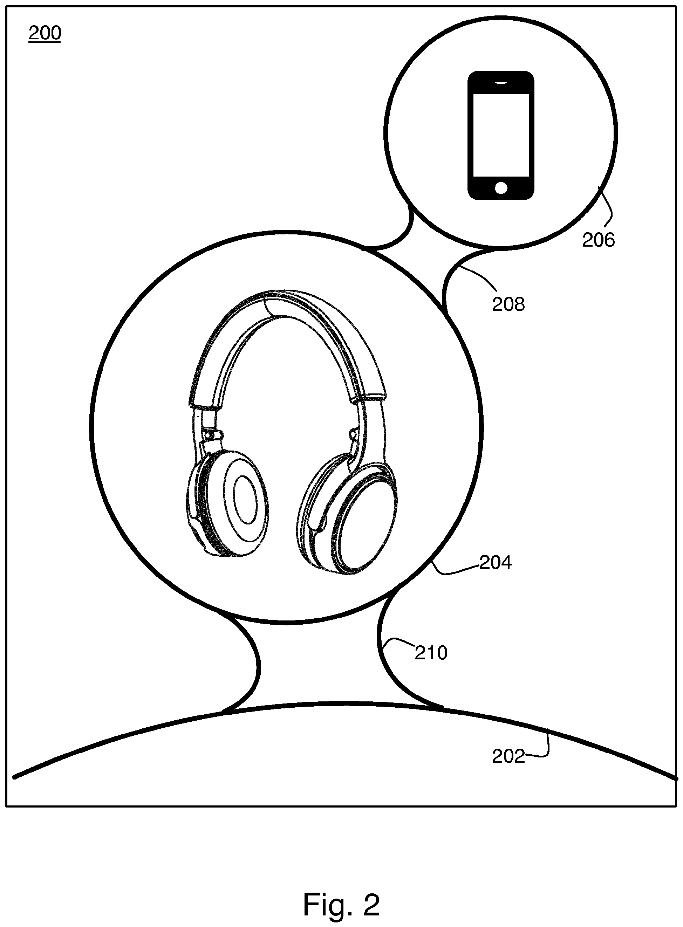

Figure 1 shows a representative collection of devices and the wireless connections between them. Figures 2 through 9 show various screens of the user interface which show to the user the collection of devices and interconnections depicted in figure 1 in various states of operation. In figure 1, a first endpoint device 102 is a tablet computer. A second endpoint device 104 is a mobile phone. A third endpoint device 106 is another mobile phone. A first wireless device 108 is a set of headphones. A second wireless device 110 is a portable speaker. In an initial state shown in figure 1, the tablet and first mobile phone are paired with the headphones, and the second mobile phone is paired with the speaker. The wireless links between devices are commonly made using Bluetooth® wireless technology, but may also be made using WiFi® wireless technology or any other suitable wireless connection. In the examples that follow, the screen of a tablet computer is used, and a set of headphones are shown as examples only; the interface described is not limited to such devices.

In figure 2, a screen 200 that would be shown on the tablet computer 102, a partial circle or arc 202 at the bottom of the screen represents the tablet itself. A first full circle 204 represents the headphones 108, and a second full circle 206 represents the mobile phone 104. Tapered connectors 208 and 210 between the circles represent the wireless connections between the headphones and the two endpoint devices. This allows the user to easily observe that the device he's holding, represented by the partial circle that if complete would surround the user himself, is connected to the headphones, which are also connected to the first mobile phone. The connections are shown as a pair of curved lines extending from one arc or circle to the other circle, with the lines curved slightly towards each other. In some examples, the space between the curved lines is filled with a solid color. In some examples, a symbol, icon, or text may be displayed within the connector to indicate the nature of the connection, such as a Bluetooth icon to represent a Bluetooth connect, or a WiFi icon to indicate that the devices are connected over WiFi. In other examples, the color of the fill may indicate the type of connection. Text may also be used within the arc and circles to identify the devices, in place of or in addition to visual representations of the devices.

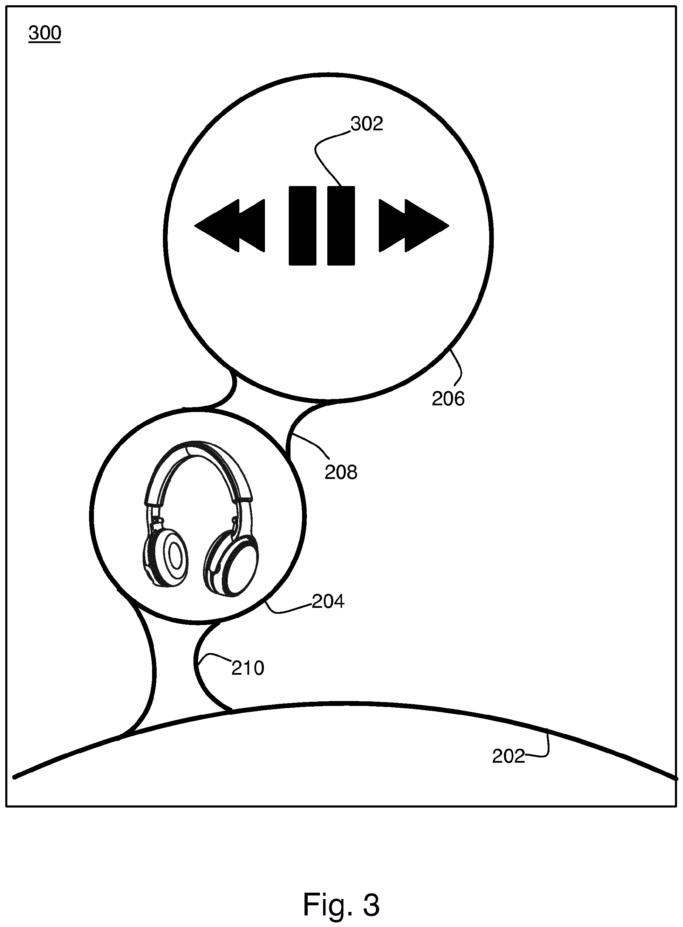

Another aspect of the user interface is shown by screen 300 in figure 3. In this screen, the mobile phone represented by circle 206 is providing audio to the headphones. To show this, the circle 204 is decreased in size, and the circle 306 is increased in size. The circle 206 shows transport controls 302 (e.g., pause, last track, next track), and could also show information about the audio, such as a track name, album name, or cover art, to name a few examples. Pressing the controls in the user interface of the device showing the screen 300 results in that device informing the headphones of the action, so that the headphones can relay the command to the remote device which will respond to it.

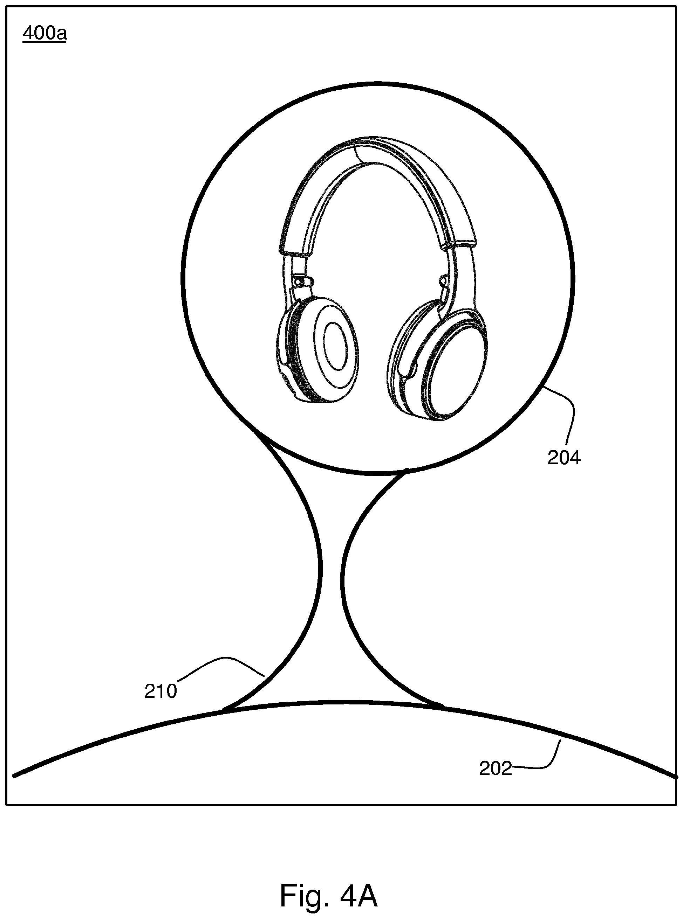

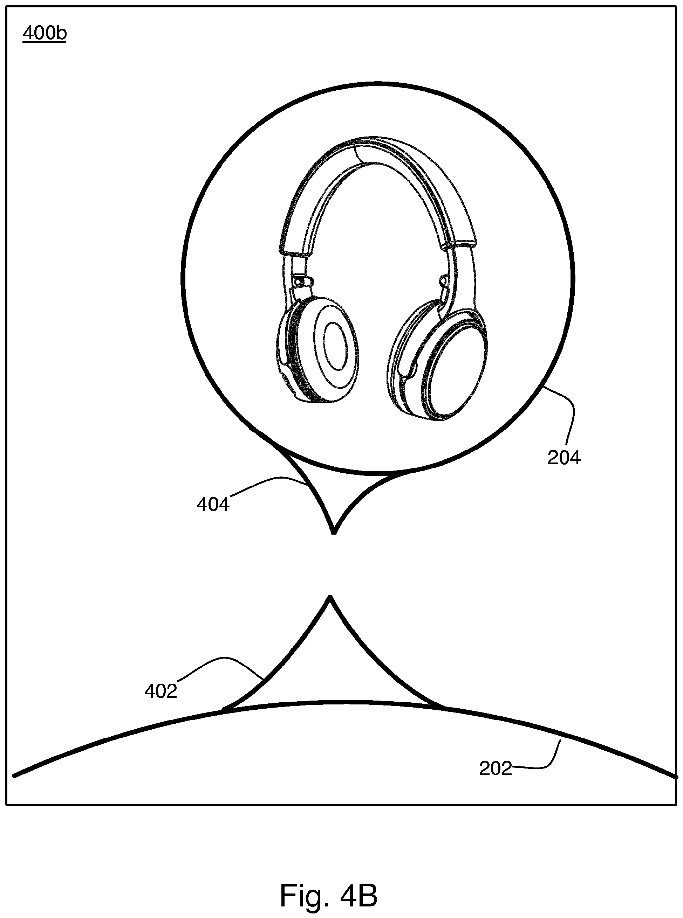

In figures 4A and 4B, a similar screen 400a, 400b shows how the graphical interface responds to user input to show the user what is going to happen in response to the input. Specifically, in screen 400a, a user is dragging the circle 204 representing the headphones away from the arc 202 representing the tablet displaying the interface. This gesture tells the headphones to disconnect from the tablet. As the user drags the circle away from the arc, the connector 210 narrows, as shown in figure 4A, until it breaks, as shown by points 402 and 404 in figure 4B, indicating intuitively that the user is breaking the connection to the headphones. In actual practice, it may be desired to animate the breaking of the connection before actually breaking it, and only committing to the disconnection after the user releases the circle or holds it away for some predetermined amount of time after the break is shown. If the user brings the circle back to the arc, the animation shows the connection being restored, returning to the screen 400a, and the headphones are not disconnected. Once the user has broken the connection in the user interface, the tablet transmits to the headphones a command to disconnect itself from the tablet. Alternatively, the tablet may simply turn off the connection itself, but that may leave the headphones in an uncertain state. The same interface may be used for disconnecting the remote device represented by circle 206 in figure 2 from the headphones, by dragging the circle 206 away from the circle 204 until the connector 208 breaks (not shown).

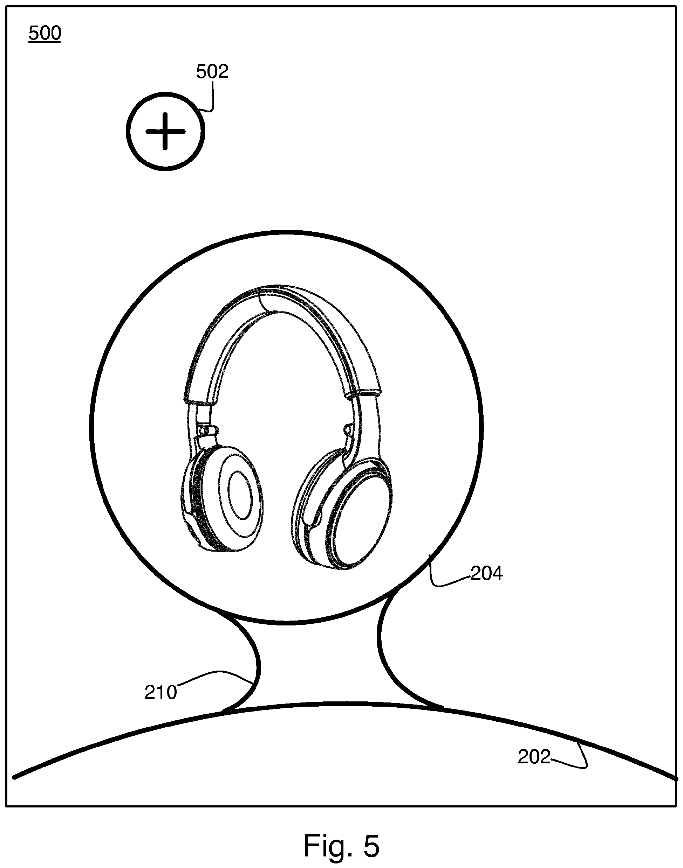

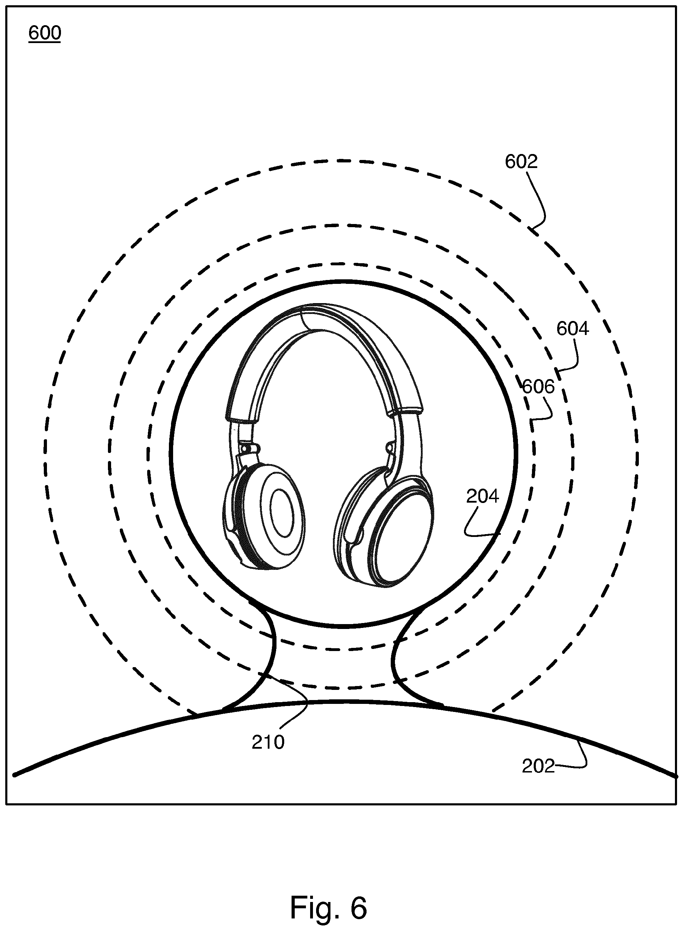

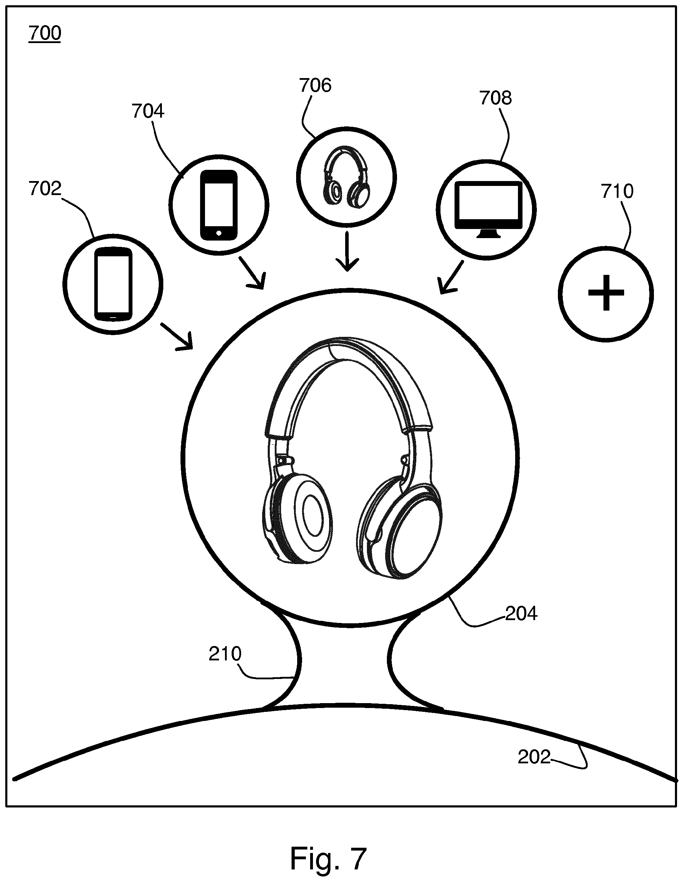

Going the other direction, screens 500 in figure 5, 600 in figure 6, and 700 in figure 7 show the interface for connecting additional devices (such as another one of the mobile phones) to the headphones. In screen 500, a circle 502 with a plus sign is shown near the circle 204 for the headphones. Tapping that circle 502 puts the headphones into a pairing mode. If no other devices are currently paired with the headphones, the interface shows screen 600. In screen 600, circles 602, 604, 606 radiating from the headphones' circle 204 indicate that the headphones are now broadcasting their availability for pairing to other devices that might be in the area. In other examples, a glowing field, rather than radiating circles, may be used. This screen might be used whenever the headphones are in pairing mode, whether initiated through the interface of screen 500 or by the headphones' own user interface.

When other devices are already paired with the headphones, screen 700 in figure 7 is used. In screen 700, additional circles 702, 704, 706, 708 representing previously paired devices, which aren't currently connected, are arrayed around the circle 204 representing the headphones. Another circle 710 contains a plus sign, for indicating that the user wishes to pair yet another device. A user may connect the headphones to one of the already-paired devices by simply dragging that device's circle onto the circle representing the headphones. Doing so will return the user to screen 200 in figure 2, showing the other connected device as a second circle connected to the headphones' circle. Some intermediate animation may be used to show that the connection is being established.

Note that one of the available devices in screen 700 is not a source device, but is another set of headphones, in circle 706. For some wireless technologies or device architectures, it may be possible for two output devices to be connected to each other, to engage in a variety of peer-to-peer activities, such as direct voice communication or music sharing, or in the case of both devices being out-loud speakers, to provide stereo playback through the two speakers, to name some examples. The same interface used to connect other source devices to the headphones can be used to connect such peer devices. When connected, an additional prompt may be used to ask the user what functions are desired, and the user may be able to control the second output device via a relay through the first output device.

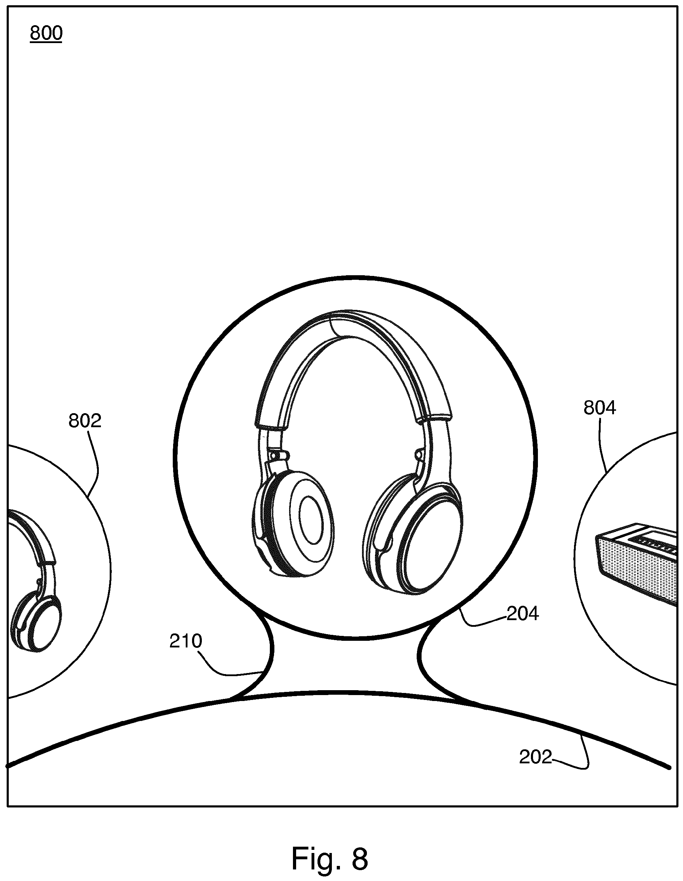

While screen 7 allows a user to connect an additional source device to a single output device, the user may also want to connect a different output device to the device displaying the user interface, whether as an additional output device or in place of the one in use. As shown in screen 800 in figure 8, the interface can display other nearby, or previously paired, output devices in additional circles 802, 804, on either side of the circle 204 for the presently controlled device. In some example, tapping one of these other devices may bring up information about it, and dragging it onto the arc 202 representing the device on which the interface is running causes that output device to be connected.

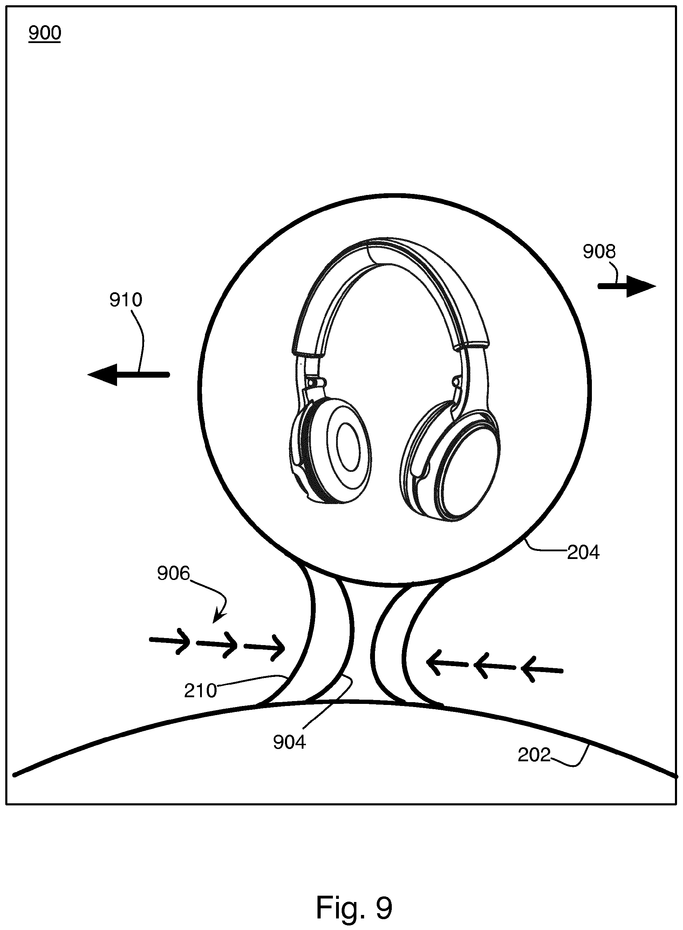

In figure 9, a screen 900 shows how the curved connector 210 between connected devices can also indicate the strength of the signal over which the devices are connected. As the signal strength weakens, the neck of the connector narrows, to narrower connection 904, intuitively indicating a weaker connection between the device displaying the screen 900, represented by the arc 202, and the device represented by the circle 204 (i.e., the headphones from figure 1). This weakening can be animated, with the connector 210 visibly narrowing or thickening as the connection strength varies, indicated by arrows 906 in this figure, or with animated shadows continuously moving in the direction of the arrows to show a weakened signal.

An additional element shown in figure 9, by arrows 908 and 910, is that the circle 204 representing the headphones may drift back and forth on the screen, giving the user an intuitive indication that the connection is live but variable, e.g., that it represents a wireless connection between separate devices. As the circle 204 moves around, the connector 210 stretches and moves accordingly to maintain the link between the arc 202 and the circle 204.

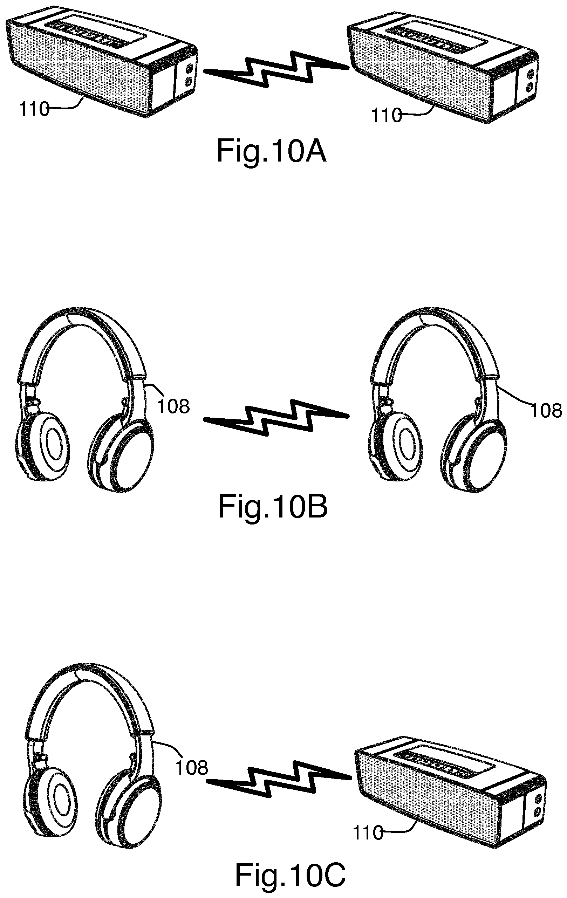

As mentioned above in the description of figure 7, two output devices may be connected to each other, and their relationship controlled using the user interface described in this application. In particular, three possible combinations of devices are shown in figures 10A-10C. While these all involve audio transmission between audio output devices, the particular types of devices involved cause the resulting communication to provide significantly different experiences for their users.

In figure 10A, two speakers 110 are connected to each other. In one common implementation, this allows one speaker to share the audio it receives from another source with the other speaker, to expand the sound stage, or to provide a stereo pair. If one or both of the speakers also has a microphone, however, a different mode is possible, that of a baby monitor (one or two-way, if both devices have microphones).

In figure 10B, two headsets 108 are connected to each other. As with the speakers, this may allow audio sharing. In addition, using the microphones in the headsets provides a walkie-talkie style communication experience. This is essentially the same as the two-way baby monitor mode, but because of the different form factors, it results in a very different experience, causing users to regard it as an entirely different function.

In figure 10C, the headset 108 is connected to the speaker 110. In addition to using this for audio sharing, allowing multiple people to hear what the headset user is listening to, this combination allows another new feature, that of public address. That is, by transmitting signals from the headset microphone to the speaker for playback, the combination is transformed into a public address system. As before, this is not electronically different from the baby monitor or walkie-talkie modes, but because of the products involved, the user experience is different and unique.

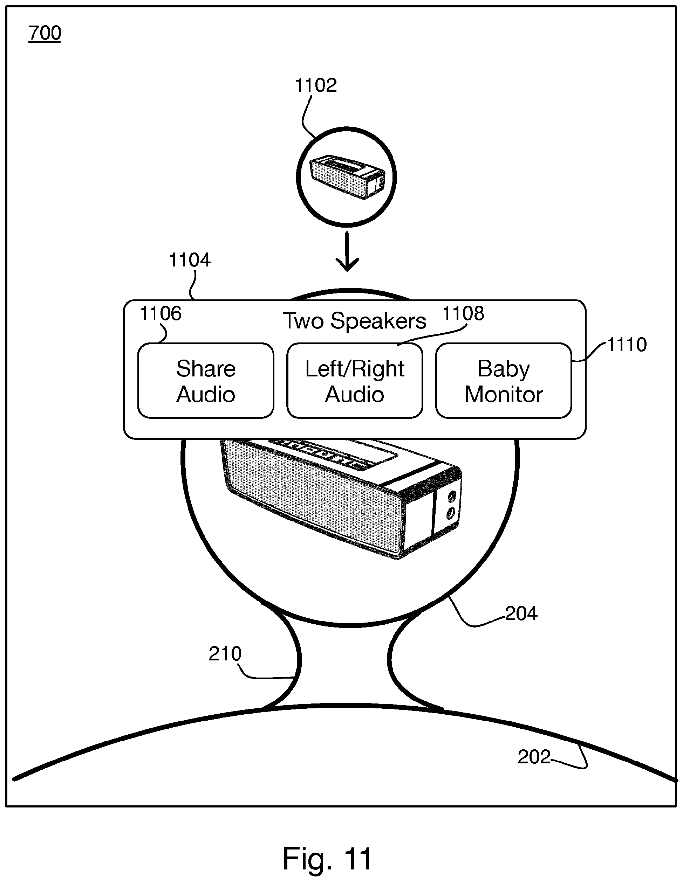

The user interface for configuring these experiences begins with that shown in figure 7, where the user drags a second audio output device onto the circle representing the first output device. The type and properties of the devices involved determines which screen is shown next. Three options, corresponding to the combinations in figures 10A-10C, are shown in figures 11, 12, and 13. In figure 11, a second speaker 1102 has been dragged onto the circle 204 showing the already-connected speaker. A prompt 1104 notes that this connects two speakers, and presents three options. Button 1106 lets the user share the audio, button 1108 configures the two speakers as a left-right pair, and button 1110 places them into a baby monitor mode. Depending on which option is selected, additional screens (not shown) may provide controls such as balance control, for the stereo pair option, or a push-to-talk control for the parent's end of the baby monitor mode. The baby monitor mode may also allow the user of the computing device to select different audio for reproduction at each of the speakers, such as lullabies for the baby end and soothing white noise for the parent end.

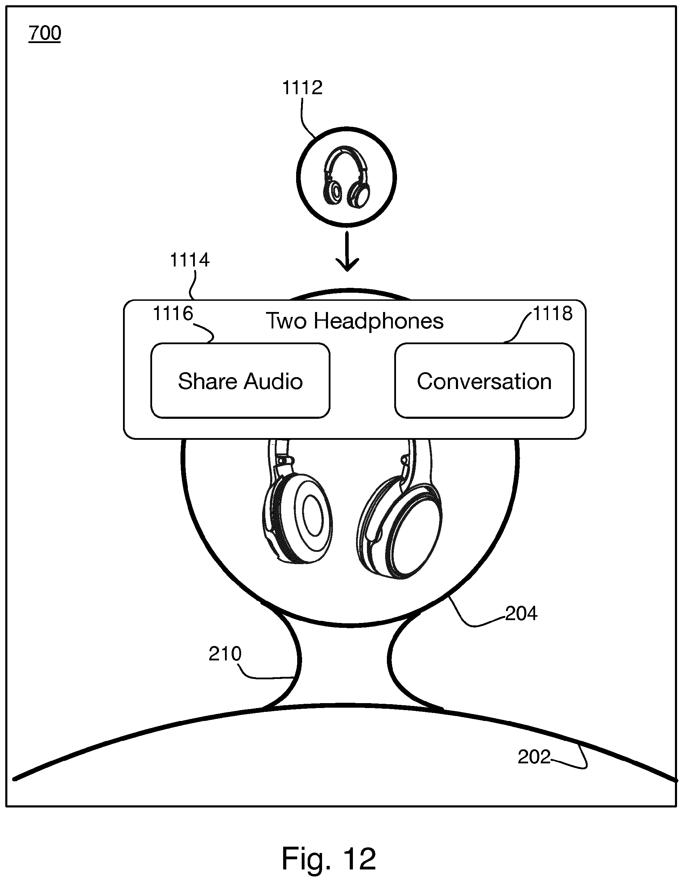

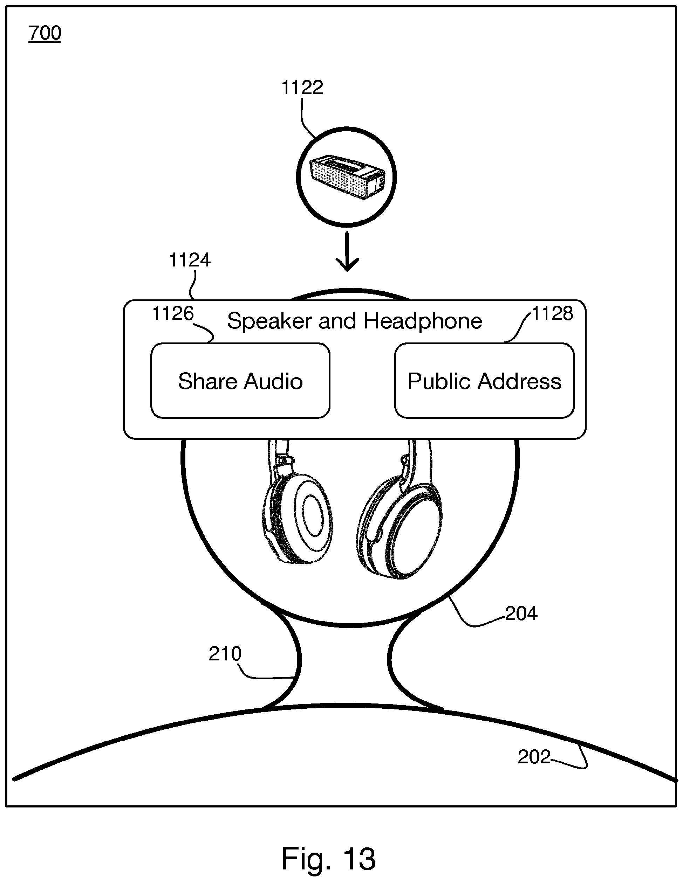

In figure 12, a second set of headphones 1112 has been dragged onto the circle 204 showing the already-connected headphones. A prompt 1114 notes that this connects two headphones, and presents two options. Button 1116 lets the user share the audio, while button 1118 configures the headsets to let the users talk to each other. Similarly, in figure 13, a speaker 1122 has been dragged onto the circle 204 showing the already-connected headphones. A prompt 1124 notes that this connects a speaker and headphones, and presents two options. Button 1126 lets the user share the audio, while button 1128 configures the combination into a public address system. If the user selects the public address system, other features of the user interface may also be changed, for example, the volume controls will control the output volume of the remote speaker, not the headphones, or two separate volume controls may be provided. A third option, not shown, could also be offered, reversing the roles, that is, using the headset as a remote listing station for audio detected near the loudspeaker. Alternatively, which of the PA mode and the remote-listening mode is presented may depend on which device was already connected, and which was dragged onto it.

As shown and described in this application, the user interface is displayed on the screen of a computing device, such as a tablet computer. Examples include the iPad® tablet from Apple, Inc., the Surface™ computer from Microsoft Corporation, or one of the many tablets running the Android™ operating system from Google, Inc. The user interface described herein can also be used on other devices, such as smart phones, car audio systems, and laptop or desktop computers. It is generally assumed that the screens used for displaying the user interface are touch-sensitive and the user inputs described above correspond to users touching the screen with their hand or a stylus and information describing such touches being communicated to a processor. In other examples, however, a non-touch screen could be used with a mouse or other pointing device, with similar interactions and effects. The device running the user interface may be referred to as a computing device, or a communication device, without any limitation intended as to the functions of a device using either such description or other descriptions. Generally the device will have a processor used for generating the display, responding to user input, managing the wireless interfaces, and otherwise operating the device. Such functions may be distributed between multiple processors, most commonly a graphics processor and a computing processor. Instructions for such processors may be embedded in the processor, in on-board memory within the device, or loaded as needed from a remote source. In some examples, some of the processing may be done in a remote device, with instructions communicated to the device showing the user interface, for example, in the case of a computer with a wireless display. Any such combination of component devices is within the scope of any claims that are not specifically limited to specific implementations.

Embodiments of the systems and methods described above comprise computer components and computer-implemented steps that will be apparent to those skilled in the art. For example, it should be understood by one of skill in the art that the computer-implemented steps may be stored as computer-executable instructions on a computer-readable medium such as, for example, hard disks, Flash ROMS, nonvolatile ROM, and RAM. Furthermore, it should be understood by one of skill in the art that the computer-executable instructions may be executed on a variety of processors such as, for example, microprocessors, digital signal processors, gate arrays, etc. For ease of exposition, not every step or element of the systems and methods described above is described herein as part of a computer system, but those skilled in the art will recognize that each step or element may have a corresponding computer system or software component. Such computer system and/or software components are therefore enabled by describing their corresponding steps or elements (that is, their functionality), and are within the scope of the disclosure.

A number of implementations have been described. Nevertheless, it will be understood that additional modifications may be made without departing from the scope of the inventive concepts described herein, and, accordingly, other embodiments are within the scope of the following claims.

## Claims

1. A system comprising:
a first audio device having a first microphone, a first speaker, and a first wireless interface for receiving audio signals for reproduction on the first speaker and sending audio signals detected by the first microphone;
a second audio device having a second speaker and a second wireless interface for receiving audio signals for reproduction on the second speaker; and
a computing device (102, 104, 106) having a user interface,
wherein
the first audio device is configurable to send the audio signals detected by the first microphone directly to the second audio device and the second audio device is configurable to receive and reproduce the audio signals received from the first audio device;
the first and second audio devices (108, 110) are each one of a loudspeaker or a headset; and
the computing device is configured to:
present on the user interface representations of both the first (204) and second (1102, 1112, 1122) audio devices;
upon receiving user input indicating a connection between the representations of the first and second audio devices, inquiring (1104, 1114, 1124) from the user which mode of a plurality of modes is to be used; and
upon receiving user input confirming that a selected mode of said plurality of modes is to be used, instruct the first audio device to send the audio signals detected by the first microphone directly to the second audio device, and instruct the second audio device to receive and reproduce the audio signals received from the first audio device; and
the plurality of modes presented by the user interface depending on whether each of the first and second audio devices is a loudspeaker or a headset.

2. The system of claim 1, wherein when the first audio device is a headset and the second audio device is a loudspeaker (1122), such that in a mode of said plurality of modes, when a user of the headset speaks, the user's voice is reproduced by the loudspeaker, the user interface identifies the first mode as a public address mode (1128).

3. The system of claim 1, wherein when the first audio device is a first loudspeaker and the second audio device is a second loudspeaker (1102), such that in a mode of said plurality of modes, a user of the second loudspeaker can hear sounds present near the first loudspeaker, the user interface identifies the first mode as a baby monitor mode (1110).

4. The system of claim 3, wherein when in a mode of said plurality of modes, the user interface presents the user with an audio playback control (1106) that allows the user to select audio for playback on the first loudspeaker, independently of any audio being played back on the second loudspeaker (1102).

5. The system of claim 3, wherein
the second loudspeaker (1102) has a second microphone, and the second loudspeaker is configurable to send audio signals detected by the second microphone directly to the first loudspeaker, and the first loudspeaker is configurable to receive and reproduce the audio signals received from the second loudspeaker; and
when in a mode of said plurality of modes, the user interface presents the user with a push-to-talk control that causes the second audio device to transmit audio signals detected by the second microphone to the first loudspeaker.

6. The system of claim 1, wherein
when the first audio device is a first headset and the second audio device is a second headset (1112) having a second microphone,
the second headset is configurable to send audio signals detected by the second microphone directly to the first headset and the first headset is configurable to receive and reproduce the audio signals received from the second headset, such that users of the first and second headsets can engage in a two-way conversation through the headsets, and
the user interface identifies a mode of said plurality of modes as a conversation mode (1118).

7. The system of claim 1, wherein when the first audio device is a loudspeaker and the second audio device is a headset, such that when sound is present in the environment of the loudspeaker, the sound is reproduced by the headset, the user interface identifies a mode of said plurality of modes as a remote listening mode.

8. The system of claim 1, wherein when one of the first audio device or the second audio device is a headset and the other audio device is a loudspeaker, the user interface identifies a mode of said plurality of modes as either a public address mode or a remote listening mode, depending on the order in which the audio devices were connected to the computing device.

9. The system of claim 1, wherein when one of the first audio device or the second audio device is a headset and the other audio device is a loudspeaker, the user interface identifies a mode of said plurality of modes as a public address mode and it identifies another mode of said plurality of modes as a remote listening mode.

10. A method of operating a system comprising
a first audio device having a first microphone, a first speaker, and a first wireless interface for receiving audio signals for reproduction on the first speaker and sending audio signals detected by the first microphone;
a second audio device having a second speaker and a second wireless interface for receiving audio signals for reproduction on the second speaker; and
a computing device (102, 104, 106) having a user interface,
wherein
the first audio device is configurable to send the audio signals detected by the first microphone directly to the second audio device and the second audio device is configurable to receive and reproduce the audio signals received from the first audio device; and
the first and second audio devices (108, 110) are each one of a loudspeaker or a headset;
the method comprising:
presenting on the user interface representations of both the first (204) and second (1102, 1112, 1122) audio devices;
upon receiving user input indicating a connection between the representations of the first and second audio devices, inquiring (1104, 1114, 1124) from the user which mode of a plurality of modes is to be used; and
upon receiving user input confirming that a selected mode of said plurality of modes is to be used, instructing the first audio device to send the audio signals detected by the first microphone directly to the second audio device, and instructing the second audio device to receive and reproduce the audio signals received from the first audio device; wherein
the plurality of modes presented by the user interface depending on whether each of the first and second audio devices is a loudspeaker or a headset.

11. The method of claim 10, wherein when the first audio device is a headset and the second audio device is a loudspeaker (1122), such that in a mode of said plurality of modes, when a user of the headset speaks, the user's voice is reproduced by the loudspeaker, the first mode is identified as a public address mode (1128).

12. The method of claim 10, wherein when the first audio device is a first loudspeaker and the second audio device is a second loudspeaker (1102), such that in a mode of said plurality of modes, a user of the second loudspeaker can hear sounds present near the first loudspeaker, the first mode is identified as a baby monitor mode (1110).

13. The method of claim 12, further comprising, when in a mode of said plurality of modes, presenting the user with an audio playback control (1106) that allows the user to select audio for playback on the first loudspeaker, independently of any audio being played back on the second loudspeaker (1102).

14. The method of claim 10, wherein
when the first audio device is a first headset and the second audio device is a second headset (1112) having a second microphone, and
the second headset is configurable to send audio signals detected by the second microphone directly to the first headset and the first headset is configurable to receive and reproduce the audio signals received from the second headset, such that users of the first and second headsets can engage in a two-way conversation through the headsets,
a mode of said plurality of modes is identified as a conversation mode (1118).

15. The method of claim 10, wherein when the first audio device is a loudspeaker and the second audio device is a headset, such that when sound is present in the environment of the loudspeaker, the sound is reproduced by the headset, a mode of said plurality of modes is identified as a remote listening mode.

16. The method of claim 10, wherein when one of the first audio device or the second audio device is a headset and the other audio device is a loudspeaker, a mode of said plurality of modes is identified as a public address mode and another mode of said plurality of modes is identified as a remote listening mode.

## Patentansprüche

1. System, umfassend:
eine erste Audiovorrichtung, die ein erstes Mikrofon, einen ersten Lautsprecher und eine erste drahtlose Schnittstelle zum Empfangen von Audiosignalen zur Wiedergabe auf dem ersten Lautsprecher und Senden von Audiosignalen, die von dem ersten Mikrofon erfasst werden, hat;
eine zweite Audiovorrichtung, die einen zweiten Lautsprecher und eine zweite drahtlose Schnittstelle zum Empfangen von Audiosignalen zur Wiedergabe auf dem zweiten Lautsprecher hat, und
eine Rechenvorrichtung (102, 104, 106), die eine Benutzeroberfläche hat,
wobei
die erste Audiovorrichtung konfigurierbar ist, um die Audiosignale, die von dem ersten Mikrofon erfasst werden, direkt zu der zweiten Audiovorrichtung zu senden, und die zweite Audiovorrichtung konfigurierbar ist, um die Audiosignale, die von der ersten Audiovorrichtung empfangen werden, zu empfangen und wiederzugeben; wobei die erste und die zweite Audiovorrichtung (108, 110) jeweils ein Lautsprecher oder eine Hörsprechgarnitur ist, und
die Rechenvorrichtung konfiguriert ist, um:
auf der Benutzeroberfläche Darstellungen sowohl der ersten (204) als auch der zweiten (1102, 1112, 1122) Audiovorrichtung zu präsentieren;
beim Empfangen von Benutzereingabe, die eine Verbindung zwischen den Darstellungen der ersten und zweiten Audiovorrichtungen angibt, bei dem Benutzer anzufragen (1104, 1114, 1124), welcher Modus einer Vielzahl von Modi zu verwenden ist, und
beim Empfangen von Benutzereingabe, die bestätigt, dass ein ausgewählter Modus der Vielzahl von Modi zu verwenden ist, die erste Audiovorrichtung anzuweisen, die Audiosignale, die von dem ersten Mikrofon erfasst werden, direkt zu der zweiten Audiovorrichtung zu senden, und die zweite Audiovorrichtung anzuweisen, die Audiosignale, die von der ersten Audiovorrichtung empfangen werden, zu empfangen und wiederzugeben, und
wobei die Vielzahl von Modi, die auf der Benutzeroberfläche präsentiert werden, davon abhängt, ob jede der ersten und zweiten Audiovorrichtungen ein Lautsprecher oder eine Hörsprechgarnitur ist.

2. System nach Anspruch 1, wobei die erste Audiovorrichtung eine Hörsprechgarnitur ist, und die zweite Audiovorrichtung in Lautsprecher (1122) ist, so dass in einem Modus der Vielzahl von Modi, wenn ein Benutzer der Hörsprechgarnitur spricht, die Stimme des Benutzers von dem Lautsprecher wiedergegeben wird, die Benutzeroberfläche den ersten Modus als einen öffentlichen Beschallungsmodus (1128) identifiziert.

3. System nach Anspruch 1, wobei, wenn die erste Audiovorrichtung ein Lautsprecher ist und die zweite Audiovorrichtung ein zweiter Lautsprecher (1102) ist, so dass in einem Modus der Vielzahl von Modi ein Benutzer des zweiten Lautsprechers Schall, der nahe dem ersten Lautsprecher gegenwärtig ist, hören kann, die Benutzeroberfläche den ersten Modus als einen Babyfonmodus identifiziert.

4. System nach Anspruch 3, wobei, wenn es in einem Modus der Vielzahl von Modi ist, die Benutzeroberfläche dem Benutzer ein Steuerelement (1106) zur Audiowiedergabe präsentiert, dass es dem Benutzer erlaubt, Audio zur Wiedergabe auf dem ersten Lautsprecher unabhängig von irgendwelchem Audio, das auf dem zweiten Lautsprecher (1102) wiedergegeben wird, auszuwählen.

5. System nach Anspruch 3, wobei
der zweite Lautsprecher (1102) ein zweites Mikrofon hat, und der zweite Lautsprecher konfigurierbar ist, um Audiosignale, die von dem zweiten Mikrofon erfasst werden, direkt zu dem ersten Lautsprecher zu senden; und der erste Lautsprecher konfigurierbar ist, um die Audiosignale, die von dem zweiten Lautsprecher empfangen werden, zu empfangen und wiederzugeben, und
wobei in einem Modus der Vielzahl von Modi die Benutzeroberfläche dem Benutzer ein Sprech-Druckbedienelement präsentiert, das die zweite Audiovorrichtung veranlasst, Audiosignale, die von dem zweiten Mikrofon erfasst werden, zu dem ersten Lautsprecher zu übertragen.

6. System nach Anspruch 1, wobei
wenn die erste Audiovorrichtung eine erste Hörsprechgarnitur ist, und die zweite Audiovorrichtung eine zweite Hörsprechgarnitur (1112), die ein zweites Mikrofon hat, ist,
die zweite Hörsprechgarnitur konfigurierbar ist, um Audiosignale, die von dem zweiten Mikrofon erfasst werden, direkt zu dem der ersten Hörsprechgarnitur zu senden, und die erste Hörsprechgarnitur konfigurierbar ist, um die Audiosignale, die von der zweiten Hörsprechgarnitur empfangen werden, zu empfangen und wiederzugeben, so dass Benutzer der ersten und der zweiten Hörsprechgarnitur über
die Hörsprechgarnituren ein Zwei-Wege-Gespräch führen können, und
die Benutzeroberfläche einen Modus der Vielzahl von Modi als einen Gesprächsmodus (1118) identifiziert.

7. System nach Anspruch 1, wobei, wenn die erste Audiovorrichtung ein Lautsprecher ist und die zweite Audiovorrichtung eine Hörsprechgarnitur ist, so dass, wenn Schall in der Umgebung des Lautsprechers gegenwärtig ist, der Schall von der Hörsprechgarnitur wiedergegeben wird, die Benutzeroberfläche einen Modus der Vielzahl von Modi als einen Fernabhörmodus identifiziert.

8. System nach Anspruch 1, wobei, wenn die erste Audiovorrichtung oder die zweite Audiovorrichtung eine Hörsprechgarnitur ist, und die andere Audiovorrichtung ein Lautsprecher ist, die Benutzeroberfläche einen Modus der Vielzahl von Modi entweder als einen Beschallungsmodus oder einen Fernabhörmodus in Abhängigkeit von der Reihenfolge, in der die Audiovorrichtungen an die Rechenvorrichtung angeschlossen wurden, identifiziert.

9. System nach Anspruch 1, wobei, wenn die erste Audiovorrichtung oder die zweite Audiovorrichtung eine Hörsprechgarnitur ist und die andere Audiovorrichtung ein Lautsprecher ist, die Benutzeroberfläche einen Modus der Vielzahl von Modi als einen Beschallungsmodus identifiziert und einen anderen Modus der Vielzahl von Modi als einen Fernabhörmodus identifiziert.

10. Verfahren des Betreibens eines Systems, umfassend
eine erste Audiovorrichtung, die ein erstes Mikrofon hat, einen ersten Lautsprecher und eine erste drahtlose Schnittstelle zum Empfangen von Audiosignalen zur Wiedergabe auf dem ersten Lautsprecher und Senden von Audiosignalen, die von dem ersten Mikrofon erfasst werden;
eine zweite Audiovorrichtung, die einen zweiten Lautsprecher und eine zweite drahtlose Schnittstelle zum Empfangen von Audiosignalen zur Wiedergabe auf dem zweiten Lautsprecher hat, und
eine Rechenvorrichtung (102, 104, 106), die eine Benutzeroberfläche hat,
wobei
die erste Audiovorrichtung konfigurierbar ist, um die Audiosignale, die von dem ersten Mikrofon erfasst werden, direkt zu der zweiten Audiovorrichtung zu senden, und die zweite Audiovorrichtung konfigurierbar ist, um die Audiosignale, die von der ersten Audiovorrichtung empfangen werden, zu empfangen und wiederzugeben, und
die erste und die zweite Audiovorrichtung (108, 110) jeweils ein Lautsprecher oder eine Hörsprechgarnitur sind, wobei das Verfahren Folgendes umfasst:
Präsentieren auf der Benutzeroberfläche von Darstellungen sowohl der ersten (204) als auch der zweiten (1102, 1112, 1122) Audiovorrichtung;
beim Empfangen einer Benutzereingabe, die eine Verbindung zwischen den Darstellungen der ersten und zweiten Audiovorrichtung angibt, Abfragen (1104, 1114, 1124) von dem Benutzer, welcher Modus einer Vielzahl von Modi zu verwenden ist, und
beim Empfangen der Benutzereingabe, die bestätigt, dass ein ausgewählter Modus der Vielzahl von Modi, zu verwenden ist, die erste Audiovorrichtung anzuweisen, um die Audiosignale, die von dem ersten Mikrofon erfasst werden, direkt zu der zweiten Audiovorrichtung zu senden, und die zweite Audiovorrichtung anzuweisen, die Audiosignale, die von der ersten Audiovorrichtung empfangen werden, zu empfangen und wiederzugeben, wobei
die Vielzahl von Modi, die von der Benutzeroberfläche präsentiert werden, davon abhängt, ob die erste und die zweite Audiovorrichtung ein Lautsprecher oder eine Hörsprechgarnitur ist.

11. Verfahren nach Anspruch 10, wobei, wenn die erste Audiovorrichtung eine Hörsprechgarnitur ist und die zweite Audiovorrichtung ein Lautsprecher (1122) ist, so dass bei einem Modus der Vielzahl von Modi, wenn ein Benutzer der Hörsprechgarnitur spricht, die Stimme des Benutzers von dem Lautsprecher wiedergegeben wird, der erste Modus als ein Beschallungsmodus (1128) identifiziert wird.

12. Verfahren nach Anspruch 10, wobei, wenn die erste Audiovorrichtung ein erster Lautsprecher ist, und die zweite Audiovorrichtung ein zweiter Lautsprecher (1102) ist, so dass in einem Modus der Vielzahl von Modi ein Benutzer des zweiten Lautsprechers Schall, der nahe dem ersten Lautsprecher gegenwärtig ist, hören kann, der erste Modus als ein Babyfonmodus (1110) identifiziert wird.

13. Verfahren nach Anspruch 12, ferner umfassend, wenn es in einem Modus der Vielzahl von Modi ist, dem Benutzer einen Audiowiedergabebedienelement (1106) präsentiert wird, das es dem Benutzer erlaubt, Audio zur Wiedergabe auf dem ersten Lautsprecher unabhängig von irgendeinem Audio, das auf dem zweiten Lautsprecher (1102) wiedergegeben wird, auszuwählen.

14. Verfahren nach Anspruch 10, wobei
wenn die erste Audiovorrichtung eine erste Hörsprechgarnitur ist, und die zweite Audiovorrichtung eine zweite Hörsprechgarnitur (1112), die ein zweites Mikrofon hat, ist, und
die zweite Hörsprechgarnitur konfigurierbar ist, um Audiosignale, die von dem zweiten Mikrofon erfasst werden, direkt zu der ersten Hörsprechgarnitur zu senden, und die erste Hörsprechgarnitur konfigurierbar ist, um die Audiosignale, die von der zweiten Hörsprechgarnitur empfangen werden, zu empfangen und wiederzugeben, so dass die Benutzer der ersten und zweiten Hörsprechgarnitur durch die Hörsprechgarnituren ein Zwei-Wege-Gespräch führen können,
ein Modus der Vielzahl von Modi als ein Gesprächsmodus (1118) identifiziert wird.

15. Verfahren nach Anspruch 10, wobei, wenn die erste Audiovorrichtung ein Lautsprecher ist, und die zweite Audiovorrichtung eine Hörsprechgarnitur ist, so dass, wenn Schall in der Umgebung des Lautsprechers gegenwärtig ist, der Schall von der Hörsprechgarnitur wiedergegeben wird, ein Modus der Vielzahl von Modi als ein Fernabhörmodus identifiziert wird.

16. Verfahren nach Anspruch 10, wobei, wenn die erste Audiovorrichtung oder die zweite Audiovorrichtung eine Hörsprechgarnitur ist, und die andere Audiovorrichtung ein Lautsprecher ist, ein Modus der Vielzahl von Modi als ein Beschallungsmodus identifiziert wird, und der andere Modus der Vielzahl von Modi als ein Fernabhörmodus identifiziert wird.

## Revendications

1. Système comprenant :
un premier dispositif audio comportant un premier microphone, un premier haut-parleur, et une première interface sans fil pour recevoir des signaux audio pour une reproduction sur le premier haut-parleur et pour envoyer des signaux audio détectés par le premier microphone ;
un deuxième dispositif audio comportant un deuxième haut-parleur et une deuxième interface sans fil pour recevoir des signaux audio pour une reproduction sur le deuxième haut-parleur ; et
un dispositif informatique (102, 104, 106) comportant une interface utilisateur,
dans lequel
le premier dispositif audio est configurable pour envoyer les signaux audio détectés par le premier microphone directement au deuxième dispositif audio et le deuxième dispositif audio est configurable pour recevoir et reproduire les signaux audio reçus en provenance du premier dispositif audio ;
les premier et deuxième dispositifs audio (108, 110) sont chacun d'un haut-parleur ou d'un casque ; et
le dispositif informatique est configuré pour :
présenter, sur l'interface utilisateur, des représentations du premier dispositif audio (204) et du deuxième dispositif audio (1102, 1112, 1122) ;
à la réception d'une entrée d'utilisateur indiquant une connexion entre les représentations des premier et deuxième dispositifs audio, demander (1104, 1114, 1124), à l'utilisateur, un mode parmi une pluralité de modes qu'il faut utiliser ; et
à la réception d'une entrée d'utilisateur confirmant qu'un mode sélectionné parmi ladite pluralité de modes doit être utilisé, ordonner au premier dispositif audio d'envoyer les signaux audio détectés par le premier microphone directement au deuxième dispositif audio, et ordonner au deuxième dispositif audio de recevoir et reproduire les signaux audio reçus en provenance du premier dispositif audio ; et
la pluralité de modes présentés par l'interface utilisateur variant selon que chacun des premier et deuxième dispositifs audio est un haut-parleur ou un casque.

2. Système selon la revendication 1, dans lequel, lorsque le premier dispositif audio est un casque et le deuxième dispositif audio est un haut-parleur (1122), de sorte que, dans un mode parmi ladite pluralité de modes, lorsqu'un utilisateur du casque parle, la voix de l'utilisateur est reproduite par le haut-parleur, l'interface utilisateur identifie le premier mode en tant qu'un mode de sonorisation (1128).

3. Système selon la revendication 1, dans lequel, lorsque le premier dispositif audio est un premier haut-parleur et le deuxième dispositif audio est un deuxième haut-parleur (1102), de sorte que, dans un mode parmi ladite pluralité de modes, un utilisateur du deuxième haut-parleur puisse entendre des sons présents à proximité du premier haut-parleur, l'interface utilisateur identifie le premier mode en tant que mode d'interphone bébé (1110).

4. Système selon la revendication 3, dans lequel, lorsque dans un mode parmi ladite pluralité de modes, l'interface utilisateur présente à l'utilisateur une commande de lecture audio (1106) permettant à l'utilisateur de sélectionner une audio pour une lecture sur le premier haut-parleur, indépendamment de toute audio en cours de lecture sur le deuxième haut-parleur (1102).

5. Système selon la revendication 3, dans lequel
le deuxième haut-parleur (1102) comporte un deuxième microphone, et le deuxième haut-parleur est configurable pour envoyer des signaux audio détectés par le deuxième microphone directement au premier haut-parleur, et le premier haut-parleur est configurable pour recevoir et reproduire les signaux audio reçus en provenance du deuxième haut-parleur ; et
lorsque dans un mode parmi ladite pluralité de modes, l'interface utilisateur présente à l'utilisateur une commande appuyer pour parler qui amène le deuxième dispositif audio à transmettre des signaux audio détectés par le deuxième microphone au premier haut-parleur.

6. Système selon la revendication 1, dans lequel
lorsque le premier dispositif audio est un premier casque et le deuxième dispositif audio est un deuxième casque (1112) comportant un deuxième microphone,
le deuxième casque est configurable pour envoyer des signaux audio détectés par le deuxième microphone directement au premier casque et le premier casque est configurable pour recevoir et reproduire les signaux audio reçus en provenance du deuxième casque, de sorte que des utilisateurs des premier et deuxième casques puissent établir une conversation bidirectionnelle par l'intermédiaire des casques, et l'interface utilisateur identifie un mode parmi ladite pluralité de modes en tant qu'un mode de conversation (1118).

7. Système selon la revendication 1, dans lequel, lorsque le premier dispositif audio est un haut-parleur et le deuxième dispositif audio est un casque, de sorte que, lorsque le son est présent dans l'environnement du haut-parleur, le son soit reproduit par le casque, l'interface utilisateur identifie un mode parmi ladite pluralité de modes en tant qu'un mode d'écoute à distance.

8. Système selon la revendication 1, dans lequel, lorsque l'un du premier dispositif audio ou du deuxième dispositif audio est un casque et l'autre dispositif audio est un haut-parleur, l'interface utilisateur identifie un mode parmi ladite pluralité de modes en tant qu'un mode de sonorisation ou un mode d'écoute à distance, en fonction de l'ordre dans lequel les dispositifs audio ont été raccordés au dispositif informatique.

9. Système selon la revendication 1, dans lequel, lorsque l'un du premier dispositif audio ou du deuxième dispositif audio est un casque et l'autre dispositif audio est un haut-parleur, l'interface utilisateur identifie un mode parmi ladite pluralité de modes en tant qu'un mode de sonorisation et elle identifie un autre mode parmi ladite pluralité de modes en tant qu'un mode d'écoute à distance.

10. Procédé de fonctionnement d'un système comprenant :
un premier dispositif audio comportant un premier microphone, un premier haut-parleur, et une première interface sans fil pour recevoir des signaux audio pour une reproduction sur le premier haut-parleur et pour envoyer des signaux audio détectés par le premier microphone ;
un deuxième dispositif audio comportant un deuxième haut-parleur et une deuxième interface sans fil pour recevoir des signaux audio pour une reproduction sur le deuxième haut-parleur ; et
un dispositif informatique (102, 104, 106) comportant une interface utilisateur,
dans lequel
le premier dispositif audio est configurable pour envoyer les signaux audio détectés par le premier microphone directement au deuxième dispositif audio et le deuxième dispositif audio est configurable pour recevoir et reproduire les signaux audio reçus en provenance du premier dispositif audio ; et
les premier et deuxième dispositifs audio (108, 110) sont chacun d'un haut-parleur ou d'un casque ;
le procédé comprenant :
présenter, sur l'interface utilisateur, des représentations du premier dispositif audio (204) et du deuxième dispositif audio (1102, 1112, 1122) ;
à la réception d'une entrée d'utilisateur indiquant une connexion entre les représentations des premier et deuxième dispositifs audio, demander (1104, 1114, 1124), à l'utilisateur, un mode parmi une pluralité de modes qu'il faut utiliser ; et
à la réception d'une entrée d'utilisateur confirmant qu'un mode sélectionné parmi ladite pluralité de modes doit être utilisé, ordonner au premier dispositif audio d'envoyer les signaux audio détectés par le premier microphone directement au deuxième dispositif audio, et ordonner au deuxième dispositif audio de recevoir et reproduire les signaux audio reçus en provenance du premier dispositif audio ; dans lequel
la pluralité de modes présentés par l'interface utilisateur variant selon que chacun des premier et deuxième dispositifs audio est un haut-parleur ou un casque.

11. Procédé selon la revendication 10, dans lequel, lorsque le premier dispositif audio est un casque et le deuxième dispositif audio est un haut-parleur (1122), de sorte que, dans un mode parmi ladite pluralité de modes, lorsqu'un utilisateur du casque parle, la voix de l'utilisateur est reproduite par le haut-parleur, le premier mode est identifié en tant qu'un mode de sonorisation (1128).

12. Procédé selon la revendication 10, dans lequel, lorsque le premier dispositif audio est un premier haut-parleur et le deuxième dispositif audio est un deuxième haut-parleur (1102), de sorte que, dans un mode parmi ladite pluralité de modes, un utilisateur du deuxième haut-parleur puisse entendre des sons présents à proximité du premier haut-parleur, le premier mode est identifié en tant que mode d'interphone bébé (1110).

13. Procédé selon la revendication 12, comprenant en outre, lorsque dans un mode parmi ladite pluralité de modes, présenter à l'utilisateur une commande de lecture audio (1106) permettant à l'utilisateur de sélectionner une audio pour une lecture sur le premier haut-parleur, indépendamment de toute audio en cours de lecture sur le deuxième haut-parleur (1102).

14. Procédé selon la revendication 10, dans lequel
lorsque le premier dispositif audio est un premier casque et le deuxième dispositif audio est un deuxième casque (1112) comportant un deuxième microphone, et
le deuxième casque est configurable pour envoyer des signaux audio détectés par le deuxième microphone directement au premier casque et le premier casque est configurable pour recevoir et reproduire les signaux audio reçus en provenance du deuxième casque, de sorte que des utilisateurs des premier et deuxième casques puissent établir une conversation bidirectionnelle par l'intermédiaire des casques,
un mode parmi ladite pluralité de modes est identifié en tant qu'un mode de conversation (1118).

15. Procédé selon la revendication 10, dans lequel, lorsque le premier dispositif audio est un haut-parleur et le deuxième dispositif audio est un casque, de sorte que, lorsque le son est présent dans l'environnement du haut-parleur, le son soit reproduit par le casque, un mode parmi ladite pluralité de modes est identifié en tant qu'un mode d'écoute à distance.

16. Procédé selon la revendication 10, dans lequel, lorsque l'un du premier dispositif audio ou du deuxième dispositif audio est un casque et l'autre dispositif audio est un haut-parleur, un mode parmi ladite pluralité de modes est identifié en tant qu'un mode de sonorisation et un autre mode parmi ladite pluralité de modes est identifié en tant qu'un mode d'écoute à distance.
